# EUROPEAN PATENT SPECIFICATION

(11) **EP 2 131 420 B1**
(45) Date of publication and mention of the grant of the patent: **17.08.2011**
(21) Application number: 09161894.2
(22) Date of filing: 04.06.2009
(51) Int. Cl.: H01M 10/05

(54) **Lithium-ion secondary battery**
Lithium-ion Akkumulator
Batterie secondaire Lithium-ion

(30) Priority: 04.06.2008 JP 2008147057
(43) Date of publication of application: 09.12.2009
(73) Proprietor: HITACHI VEHICLE ENERGY, LTD., Hitachinaka-shi Ibaraki 312-0061 (JP)
(72) Inventor: Mitani, Takayuki, Ibaraki 312-0061 (JP); Suzuki, Katsunori, Ibaraki 312-0061 (JP)
(74) Representative: Matias, Bruno M.

(56) References cited:
- EP-A- 0 391 720
- EP-A- 0 771 040
- EP-A- 0 895 297
- EP-A- 0 964 461
- EP-A- 0 964 469
- FR-A- 1 484 611
- FR-A- 2 503 459
- JP-A- 1 239 768

## Description

### TECHNICAL FIELD:

The present invention relates to a lithium-ion secondary battery.

### BACKGROUND ART:

In prior arts, sealed batteries have been widely used in household electrical appliances, and in recent years, lithium-ion secondary batteries included in a category of the sealed batteries have become increasingly prevalent in particular. Further, since energy densities of lithium-ion secondary batteries are relatively high, intensive researches and developments are underway at present on those to be used as vehicle-mounted power supplies for pure electric vehicles (PEV) and hybrid electric vehicles (HEV).

In a lithium-ion secondary battery for a PEV and an HEV, a structure capable of suppressing internal resistance thereof is adopted to ensure a large-current discharge at a starting time of motor driving. More specifically, the lithium-ion secondary battery having such a structure includes an electrode group wherein a positive electrode formed in a comb-like shape on a longitudinal side with a positive electrode lead piece and a negative electrode formed in a comb-like shape on a longitudinal side with a negative electrode lead piece are windingly arranged via a separator. The positive and negative electrode lead pieces (the positive electrode lead piece and the negative electrode lead piece) are led out in mutually opposite upward and downward directions. A tip end part of the positive electrode lead piece is connected to an outer circumferential surface of a ring-like positive electrode collector part for positive potential collection, for example, by means of ultrasonic welding, and a tip end part of the negative electrode lead piece is connected to an outer circumferential surface of a ring-like negative electrode collector part for negative potential collection, for example, by means of ultrasonic welding. In common practice, each of the positive and negative electrode lead pieces has a thickness of an order of tens of micrometers, and the positive and negative electrode collector parts are disposed opposedly to mutually opposite end surfaces of the electrode group. The electrode group is immersed in an electrolyte, the immersed electrode group and the positive and negative electrode collector parts are contained in a bottomed battery container, and the bottomed battery container is sealed with a battery lid via an electrically insulating gasket. Japanese Patent Laid-open No. 2004-172035 (Document 1) discloses a typical lithium-ion secondary battery for the PEV and HEV having the above structure, for example.

EP-A-0895297 describes a lithium secondary battery which includes a battery case and an internal electrode body contained in the battery case and including a positive electrode and a negative electrode wound through a separator filmmade of porous polymer, and uses a nonaqueous organic electrolyte. Opposing pressure release mechanisms are disposed at both ends of the battery case in the winding direction of the positive electrode and the negative electrode.

EP-A-0964461 shows a collector terminal for a non-aqueous electrolyte secondary battery, especially a large-size battery, is provided which is free from breakage when its exterior terminal is fastened with a nut with an excessive torque. The section of the collector terminal forming an exterior terminal and the section where lead plates taken out from the electrode group consist of different types of metals, which are integrated by solid-phase bonding or by vacuum brazing.

FR-A-1484611 shows a method and a secondary battery built accordingly which comprises an insulator shell made of a deformable material exhibiting two orifices, a rolled up electrode assembly and a battery box containing the insulator with the electrode assembly therein.

Some kinds of lithium-ion secondary batteries for the PEV and HEV have an entire periphery of the electrode group with an insulating coating for preventing an internal short-circuit due to possible contact with the battery container. In the lithium-ion secondary battery, the insulating coating is extended from the electrode group to the periphery of the positive electrode collector part. As a material of this insulating coating, an adhesive tape that comprises a polyimidic substrate having one side thereof coated with an adhesive agent of hexamethacrylate is applicable as disclosed in Paragraph No. 0025 of Document 1.

The tip end part of each positive electrode lead piece in extended connection from the periphery of the electrode group is connected to the positive electrode collector part with a certain degree of tension exerted toward a center of the electrode group. Therefore, in cases where the lithium-ion secondary battery is used as a vehicle-mounted power supply, there is a possibility that the positive electrode lead piece maybe disconnected due to application of significant vibrations. In this event, the insulating coating mentioned above serves to prevent the internal short-circuit due to possible contact between the positive electrode lead piece and the battery container.

However, in the above prior arts, the tip end part of the insulating coating may come into contact with the positive electrode lead piece having a small thickness such as indicated above due to adverse effects for a long time of use (e.g., loosening of the tip end part, or vibrations applied thereto), causing damage to the positive electrode lead piece. Further, in cases where the lithium-ion secondary battery is mounted on a vehicle, the tip end part of a skirt part extended from the gasket toward the electrode group will also be vibrated, which may cause the tip end part of the skirt part to come into contact with the positive electrode lead piece, resulting disconnection of the positive lead piece. If the positive electrode lead piece is disconnected, the internal resistance of the lithium-ion secondary battery increases, giving rise to a problem of degradation of the large-current discharge performance thereof.

### SUMMARY OF THE INVENTION:

It is therefore an object of the present invention to provide a lithium-ion secondary battery that can prevent degradation of large-current discharge performance and the internal short-circuit due to application of possible vibrations to ensure high reliability for a long time of use.

In accomplishing this object of the present invention and according to one aspect thereof, a lithium-ion secondary battery in the present invention comprises a positive electrode with a comb-like shaped positive electrode lead piece formed on one side of said positive electrode, a negative electrode with a comb-like shaped negative electrode lead piece formed on one side of said negative electrode, an electrode assembly in which said positive and negative electrodes are rolled up interposing a separator therebetween, and said positive and negative electrode lead pieces are directed in the mutually opposite directions at opposite sides of said positive and negative electrodes, a ring-like shaped positive electrode collector disposed on one end side of said electrode assembly, said positive electrode lead piece being joined to an outer periphery part of said positive electrode collector to collect potential on said positive electrode, a ring-like shaped negative electrode collector disposed on the other end side of said electrode assembly at the opposite position to said positive electrode collector, said negative electrode lead piece being joined to an outer periphery part of said negative electrode collector to collect potential on said negative electrode, a can type battery container for containing said electrode assembly and said positive and negative electrode collectors, a battery lid for sealing said battery container via a gasket, and/or an insulator laid over at least extent from the outer surface of said positive or negative electrode collector disposed between said electrode assembly and said battery lid to the one end of battery lid' s side in said electrode assembly so as to cover said positive or negative electrode lead piece with said insulator.

In accordance with the present invention, even when vibrations are applied to the lithium-ion secondary battery, the insulator serves to prevent direct contact between the gasket and the positive electrode lead piece to protect the positive electrode lead piece frompossible disconnection thereof. Thus, the lithium-ion secondary battery according to the present invention has an advantage that an internal short-circuit can be prevented without degradation of large-current discharge performance to ensure high reliability for a long time of use.

### BRIEF DESCRIPTION OF THE DRAWINGS:

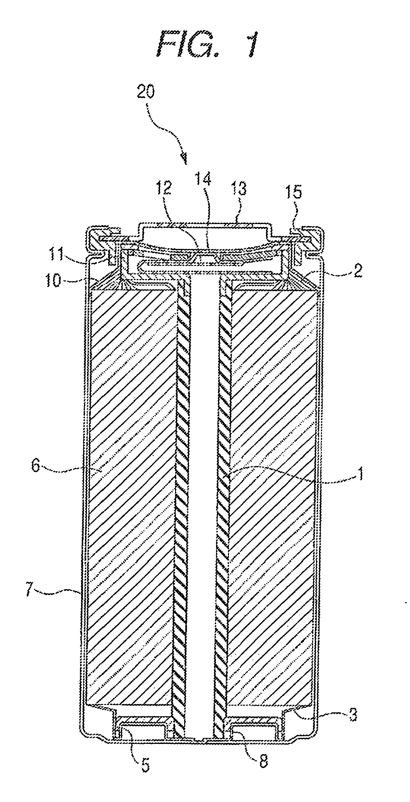

FIG. 1 is a longitudinal sectional view of a lithium-ion secondary battery of the present invention.
FIG. 2A is a sectional view of an upper part of the lithium-ion secondary battery in the preferred embodiment illustrated in FIG. 1.
FIG. 2B is a plan view of the lithium-ion secondary battery in the preferred embodiment illustrated in FIG. 1, showing a form taken before a connection plate, a support member, and a battery lid are incorporated.
FIG. 3 is a plan view of a lithium-ion secondary battery according to another applicable preferred embodiment of the present invention, showing a form taken before a connection plate, a support member, and a battery lid are incorporated.

### DETAILED DESCRIPTION OF THE PREFERRED EMBODIMENTS:

The present invention relates to lithium-ion secondary batteries, and more particularly to a lithium-ion secondary battery in which a positive electrode formed in a comb-like shape on a longitudinal side with a positive electrode lead piece and a negative electrode formed in a comb-like shape on a longitudinal side with a negative electrode lead piece are windingly arranged via a separator, in which the positive and negative electrode lead pieces are led out in the mutually opposite upward and downward directions, and in which the tip end part of each of the positive and negative electrode lead pieces is connected to the outer circumferential surface of each of ring-like positive and negative electrode collector parts.

A lithium-ion secondary battery of the present invention includes an electrode group (an electrode assembly) having a structure that a positive electrode formed in a comb-like shape on a longitudinal side with a positive electrode lead piece (a positive electrode with a comb-like shapedpositive electrode lead piece formed on one side of said positive electrode) and a negative electrode formed in a comb-like shape on a longitudinal side with a negative electrode lead piece (a negative electrode with a comb-like shaped negative electrode lead piece formed on one side of said negative electrode) are windingly arranged via a separator (rolled up interposing a separator therebetween), the positive and negative electrode lead pieces being led out (directed) in the mutually opposite upward and downward directions (in the mutually opposite directions at opposite sides of said positive and negative electrodes), a ring-like shaped positive electrode collector part disposed opposedly to one end surface of the electrode group, a tip end part of the positive electrode lead piece being connected to an outer circumferential surface (an outer periphery part) of the positive electrode collector part so as to collect potential appearing on the positive electrode, a ring-like shaped negative electrode collector part disposed on the other end side of the electrode group at the opposite position to the positive electrode collector part, the tip end part of the negative electrode lead piece being connected to the outer circumferential surface of the negative electrode collector part so as to collect potential appearing on the negative electrode, a bottomed battery container (a can type battery container) for containing the electrode group and the positive and negative electrode collector parts, a battery lid for sealing the battery container via a gasket, and an insulator disposed between the electrode group and the battery lid to the extent from at least the outer circumferential surface of either one of the positive and negative electrode collector parts to a top part of the electrode group so as to cover either one of the positive and negative electrode lead pieces connected respectively to the positive and negative electrode collector parts.

In the present invention, there may also be provided such an arrangement that the insulator is extended from a top end surface of a periphery of either one of the positive and negative electrode collector parts to the top part of the electrode group so as to cover either one of the positive and negative electrode lead pieces connected respectively to the positive and negative electrode collector parts. Further, the gasket may have a skirt part extended toward the position of the electrode group, and the insulator may be arranged to provide insulation covering so as to prevent the skirt part from coming into contact with either one of the positive and negative electrode lead pieces connected respectively to the positive and negative electrode collector parts. In this arrangement, it is preferable that the insulator is disposed, with respect to the skirt part, at a position near either one of the positive and negative electrode lead pieces that is led out of the periphery of the electrode group, the positive and negative electrode lead pieces being connected respectively to the positive and negative electrode collector parts.

Furthermore, in the present invention, there may also be provided such an arrangement that, between either one of the positive and negative electrode collector parts and the end surface of the electrode group, the insulator covers either one of the positive and negative electrode lead pieces connected respectively to the positive and negative electrode collector part, the insulator being formed to have an expanded diameter in an inversely tapered shape for upper-side covering. Further, it is preferable that the upper inner circumferential surface of the insulator is in contact with the top end surface and outer circumferential surface of the periphery of either one of the positive and negative electrode collector parts, the lower inner circumferential surface of the insulator is in contact with the top part of the outer circumferential surface of the electrode group, and a center part of the insulator covers one of the positive and negative electrode lead pieces connected respectively to the positive and negative electrode collector parts. In this arrangement, the center part of the insulator is preferably formed to have an expanded diameter in an inversely tapered shape in the downward direction thereof.

Moreover, in the present invention, it is preferable that either one of the positive and negative electrode collector parts is fixedly engaged with the top end part of a core disposed at a center of winding of the electrode group. As a material of the insulator, any one of such forms as an insulating tape, a molded insulating product, and an insulating coating film is selectable, for example.

In the lithium-ion secondary battery of the present invention, said insulator is laid over an extent from the one end of the battery lid's side in said positive or negative electrode collector to the one end of the battery lid's side in said electrode assembly so as to cover said positive or negative electrode lead piece.

In the lithium-ion secondary battery of the present invention, said gasket has a skirt part extended toward a position of said electrode assembly, and said insulator is arranged between said skirt part and said positive or negative electrode lead piece.

In the lithium-ion secondary battery of the present invention, said insulator is disposed at a position closer to a part of said positive or negative electrode lead piece of the battery lid' s side led out of a periphery of said electrode assembly than said skirt part.

In the lithium-ion secondary battery of the present invention, said insulator is formed to have an expanded diameter in an inversely tapered shape and covers said positive or negative electrode lead piece of the battery lid's side.

In the lithium-ion secondary battery of the present invention, an inner circumferential surface of the battery lid' s side of said insulator is in contact with the one end of the battery lid's side and the outer surface in said positive or negative electrode collector, an inner circumferential surface of electrode assembly's side of the insulator is in contact with an outer surface of the battery lid' s side of the electrode assembly, and a center part of the insulator covers said positive or negative electrode lead piece of the battery lid's side.

In the lithium-ion secondary battery of the present invention, the center part of said insulator is formed to have an expanded diameter in an inversely tapered shape towards the electrode assembly.

In the lithium-ion secondary battery of the present invention, said positive or negative electrode collector is fixedly engaged with battery lid's side of a core disposed at a center of rolling of said electrode assembly.

In the lithium-ion secondary battery of the present invention, said insulator is selected from a group consisting of an insulating tape, a molded insulating product, and an insulating coating film.

The present invention will be described in detail with reference to accompanying drawings as related to applicable preferred embodiments of a cylindrical type of lithium-ion secondary battery for an HEV thereinafter.

### [Construction]

ReferringtoFIG. 1, there is shown a lithium-ion secondary battery 20 according to a preferred embodiment of the present invention. The lithium-ion secondary battery 20 comprises a bottomed cylindrical battery container 7 made of nickel-plated steel. The battery container 7 contains an electrode group 6 disposing positive electrode plate and negative electrode plate each having a ribbon-like shape via a separator around a hollow cylindrical core 1 made of polypropylene.

In the present preferred embodiment, the positive electrode plate is prepared in the following manner:

As a positive electrode active material, lithium manganese composite oxide powder is used. To 90 parts by weight of the lithium manganese composite oxide powder, there are added 5 parts by weight of carbon powder as a conductive material and 5 parts by weight of polyvinylidene difluoride (PVDF) as a binding agent. Further, as a dispersing solvent, N-methyl-2-pyrolidone (NMP) is added, and the mixture thus prepared is kneaded to form slurry. The slurry thus formed is evenly applied to both sides of an aluminum foil sheet of 20 µm in thickness (positive electrode potential collecting material). After the slurry dries up, the aluminum foil sheet is pressed to provide an integrated form. In the above procedure, a part uncoated with the slurry is left on one side along the longitudinal direction of the aluminum foil sheet, and the uncoated part is cut out into a comb-like pattern. A remaining part patterned in this cutting-out is formed as a positive electrode lead piece 2.

In the lithium manganese composite oxide noted above, lithium manganate (LiMn₂O₄), or lithium site or manganese site of LiMn₂O₄ are subjected to replacement or doping with another metallic elements. For example, component compositions represented by the following chemical formulas are applicable: Li₁₊ₓM_{y}Mn_{2-x-y}O₄ (where M denotes Li, Co, Ni, Fe, Cu, Al, Cr, Mg, Zn, V, Ga, B or F), and layered lithium manganate (LiMnₓM₁₋ₓO₂) (where M denotes at least one metallic element selected from a group consisting of Li, Co, Ni, Fe, Cu, Al, Cr, Mg, Zn, V, Ga, B and F).

On the other hand, a negative electrode plate is prepared in the following manner:

As a negative electrode active material, amorphous carbon powder or crystalline carbon powder is used. To 90 parts by weight of the amorphous or crystalline carbon powder, 10 parts by weight of PVDF is added as a binding agent. Further, as a dispersing solvent, NMP is added, and the mixture thus prepared is kneaded to form slurry. The slurry thus formed is applied to both sides of a rolled copper foil sheet of 10 µm in thickness (negative electrode potential collecting material). After the slurry dries up, the rolled copper foil sheet is pressed to provide an integrated form. In the above procedure, a part uncoated with the slurry is left on one side along the longitudinal direction of the rolled copper foil sheet, and the uncoated part is cut out into a comb-like pattern. A remaining part patterned in this cutting-out is formed as a negative electrode lead piece 3.

In formation of the electrode group 6, the positive electrode plate and the negative electrode plate are windingly arranged via a porous polyethylene separator in a cross-sectional spiral-wise form around the core 1 so that both the positive and negative electrode plate will not come into direct contact with each other. The positive electrode lead piece 2 and the negative electrode lead piece 3 mentioned above are disposed at the mutually opposite positions of the electrode group 6, and each of these lead pieces is protruded from the edge of the separator by a predetermined length (e.g., 4 mm). The electrode group 6 is formed to have a predetermined inside diameter and a predetermined outside diameter by adjusting lengths of the positive electrode plate, negative electrode plate, and separator. To prevent unwinding, an adhesive tape is securely attached to the winding end part of the electrode group 6. Further, over the entire periphery of the electrode group 6, an insulating coating is provided to ensure insulation against the inner circumferential surface of the battery container 7. As an insulating coating material, an adhesive tape is applicable, for example.

On an underside of the electrode group 6, there is disposed a negative electrode collector ring 5 made of copper for collecting potential appearing on the negative electrode plate. The outer circumferential surface of the bottom end part of the core 1 is fixed to the inner circumferential surface of the negative electrode collector ring 5. To an outer circumferential surface of the negative electrode collector ring 5, the tip end part of the negative electrode lead piece 3 led out of the negative electrode plate is connected by means of ultrasonic welding. On a lower side of the negative electrode collector ring 5, there is disposed a negative electrode lead plate 8 made of copper for providing electrical conduction. By means of resistance welding, the negative electrode lead plate 8 is connected to an inner bottom part of the battery container 7, which is also used as a negative external terminal.

On the other hand, at a position on a substantially extended line of the core 1 on the topside of the electrode group 6, there is disposed a positive electrode collector ring 11 made of aluminum for collecting potential appearing on the positive electrode plate. The positive electrode collector ring 11 is fixedly engaged with a top end part of the core 1. By means of ultrasonic welding, the tip endpart of the positive electrode lead piece 2 led out of the positive electrode plate is connected to the peripheral brim (outer circumferential surface) that is integrally extended from the periphery of the positive electrode collector ring 11.

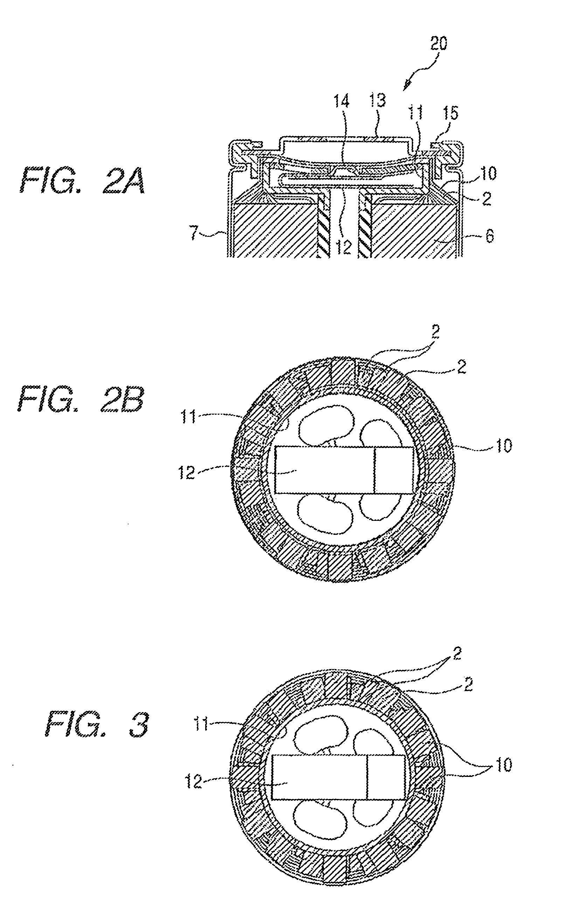

As shown in FIG. 2A, a battery lid 13, which is also used as a positive electrode external terminal, is disposed over the positive electrode collector ring 11. The battery lid 13 comprises a disc-like top cap made of nickel-plated steel and a diaphragm that will be retroflexed toward a top cap on occurrence of a significant increase in battery internal pressure. A disk center area of the top cap is formed to provide a cylindrical protruded part that is upwardly extruded, and the protruded part has an opening formed at the center thereof. A brim part of the top cap is caulked with a brim part of the diaphragm. The diaphragm is made of aluminum alloy and has a pan-like shape with a lower bottom part formed thereon. The bottom part of the pan-like diaphragm is flat and forms the center part thereof. Between the center part and the brim part of the diaphragm, there is provided a cleavage groove that will cleave when a predetermined level of battery internal pressure is reached due to wall thinning (not shown).

A bottom surface of the center part of the diaphragm is connected electrically and mechanically to a flat part protruded upward at the center of a connection plate 14 made of aluminum alloy. The connected point is formed by means of resistance welding to provide a predetermined strength. Between the bottom surface of the center part of the diaphragm and the periphery of the connection plate 14, there is provided a support member for supporting the diaphragm. The support member is made of aluminum alloy and has a through-hole formed at the center thereof, i.e., the support member is formed to have a flat doughnut shape along the diaphragm (a pan-like shape with a hollow center part). A periphery of the support member is latchedly secured to an insulating resin ring having a substantially T-shaped cross-sectional configuration, which is disposed between the positive electrode collector ring 11 and the battery lid 13.

When a predetermined level of battery internal pressure is reached due to occurrence of an abnormality in the battery, the diaphragm is retroflexed toward the top cap to disconnect the connection plate 14, resulting in current being cut off. Since the retroflexion working pressure of the diaphragm is set at a level higher than atmospheric pressure, the diaphragm will not restore itself to normal under atmospheric pressure once the diaphragm is retroflexed. Hence, after retroflexion of the diaphragm, the connection plate 14 will not be electrically in contact with the diaphragm again. If the battery internal pressure increases further, the cleavage groove formed on the diaphragm cleaves to let internal gas escape from the inside of the battery through the opening formed in the top cap of the battery lid 13. Thus, safety can be ensured in case of the abnormality in the battery.

To the top surface of the positive electrode collector ring 11, there is connected one side of either one of two positive electrode lead plates 12 each comprising a ribbon-like aluminum foil sheet laminated thereon. The other side of the positive electrode lead plate 12 is connected to the bottom surface of the connection plate 14. The corresponding ends of the two positive electrode lead plates 12 are connected mutually.

The battery lid 13 is caulkedly secured to the top part of the battery container 7 via a gasket 15 made of insulating heat-resistant EPDM resin. Thus, the inside of the lithium-ion secondary battery 20 is hermetically sealed (fully encapsulated). In the battery container 7, a non-aqueous electrolyte (not shown) is filled so that the electrode group 6 is entirely immersed therein. As a kind of non-aqueous electrolyte, the following electrolyte is usable, for example, a mixture solvent of ethylene carbonate (EC), dimethyl carbonate (DMC), and diethyl carbonate (DEC), in which lithium hexafluorophosphate (LiPF₆) is dissolved as a lithium salt at a concentration of one mole per liter (1 mol/L). It is to be noted that the rated capacity of the lithium-ion secondary battery 20 is 14 Ah.

Structural features of the lithium-ion secondary battery 20 according to the present preferred embodiment will then be described below.

As shown inFIGS. 2A and 2B, the tip endpart of the positive electrode lead piece 2 led out of the electrode group 6 is connected to the outer circumferential surface of the positive electrode collector ring 11, and the positive electrode lead piece 2 thus disposed is covered with an insulator 10. The insulator 10 is formed to have different diameters on the top, center and bottom parts thereof. The top part of the insulator 10 is in contact with the outer circumferential surface of the positive electrode collector ring 11 so as to cover the positive electrode collector ring 11. Further, as exemplified in FIGS. 2A and 2B, the top part of the insulator 10 also is in contact with the top surface of the outer circumferential part of the positive electrode collector ring 11. The center part of the insulator 10 is formed to have a downwardly expanded diameter in an inversely tapered shape so as to cover the positive electrode lead piece 2 from the upper side thereof. The bottom part of the insulator 10 is arranged to be in contact with the top part of the outer circumferential surface of the electrode group 6.

The insulator 10 is disposed at a position near one of the positive lead pieces 2 that is led out of the periphery of the electrode group 6 with respect to the bottom end of the skirt part extended toward the electrode-group-6 side of the gasket 15. Thus, the positive lead piece 2 is covered with the insulator 10 to the extent from the top end surface of the periphery of the positive electrode collector ring 11 to the top part of the electrode group 6 so that the positive electrode lead piece 2 is prevented from being in contact with the skirt part of the gasket 15.

As an embodiment of the insulator 10, an insulating tape, a molded insulating product, or an insulating coating film is applicable, for example. As a kind of insulating tape, an insulating adhesive tape having one side thereof coated with an adhesive agent of mexamethacrylate is applicable, for example. It is to be noted that the present invention is not limited to the use of this kind of insulating tape. In cases where an adhesive tape is used, the insulator 10 is adhesively bonded wholly or partially to at least one of the positive electrode lead pieces 2 that is led out of the periphery of the electrode group 6. As a material of a molded insulating product, a high-polymer resin such as polypropylene (PP) or polyethylene (PE) is applicable. It is also to be noted that the present invention is not limited to the use of such a high-polymer resin and that any electrically insulating resin is applicable. In case of an insulating coating film, it is allowedtouse a material capable of forming a coating film that provides insulation in an adhesive-solidified state. As shown in FIG. 3, an area of adhesive application may be only the top surface of each positive electrode lead piece 2 led out of the periphery of the electrode group 6.

### [Operation]

Operations of the lithium-ion secondary battery 20 according to the present preferred embodiment will then be described below.

In the lithium-ion secondary battery 20 according to the present preferred embodiment, the insulator 10 is provided to cover the positive electrode lead piece 2 to the extent from the top end surface of the periphery of the positive electrode collector ring 11 to the top part of the electrode group 6. Therefore, even if vibrations are applied to the lithium-ion secondary battery 20 mounted on a vehicle (HEV), the insulator 10 serves to prevent direct contact between the gasket 15 (the skirt part thereof) and positive electrode lead piece 2, protecting the positive electrode lead piece 2 from possible disconnection thereof. Further, even if the positive electrode lead piece 2 (e.g., the positive electrode lead piece 2 led out of the periphery of the electrode group 6) is disconnected due to any cause, a short-circuit due to possible contact with the battery container 7 having negative polarity can be prevented since the positive electrode lead piece 2 is covered with the insulator 10. In the lithium-ion secondary battery 20 according to the present preferred embodiment, it is therefore possible to prevent an internal short-circuit without degradation of large-current discharge performance to ensure high reliability for a long time of use.

In the present preferred embodiment, the positive electrode collector ring 11 is disposed on a topside of the electrode group 6, the positive electrode lead piece 2 is led out of the top part of the electrode group 6 to provide positive polarity on the battery lid 13, the negative electrode collector ring 5 is disposed on an underside of the electrode group 6, and the negative electrode lead piece 3 is led out of the bottom part of the electrode group 6 to provide negative polarity on the battery container 7. It is to be noted, however, that the present invention is not limited to this specific arrangement. Alternatively, there may be provided such a modified arrangement that the negative electrode collector ring 5 is disposed on the topside of the electrode group 6, the negative electrode lead piece 3 is led out of the top part of the electrode group 6 to provide negative polarity on the battery lid 13, the positive electrode collector ring 11 is disposed on the underside of the electrode group 6, and the positive electrode lead piece 2 is led out of the bottom part of the electrode group 6 to provide positive polarity on the battery container 7.

Further, while the insulator 10 is arranged to cover the positive electrode lead piece 2 to the extent from the top end surface of the periphery of the positive electrode collector ring 11 to the top part of the electrode group 6 in the present preferred embodiment, it is also to be noted that the present invention is not limited to this specific arrangement. Alternatively, there may be provided such an arrangement that the positive electrode lead piece 2 is covered to the extent from the outer circumferential surface of the positive electrode collector ring 11 to the top part of the electrode group 6.

Still further, while specific materials are demonstrated for use as positive and negative electrode active materials and non-aqueous electrolyte in the present preferred embodiment, it is also to be noted that the present invention is not limited to these specific materials. Further, as regards the materials and configurations of the battery lid and connection plate, it will be obvious to those skilled in the art that various changes and modifications may be made without departing from the scope of the present invention.

### EXAMPLES

The following describes exemplary lithium-ion secondary batteries fabricated according to the preferred embodiment mentioned above. A comparative example of a lithium-ion secondary battery fabricated for the purpose of comparison is also described below.

In a first embodiment, a lithium-ion secondary battery 20 was fabricated by using an insulating tape as an insulator 10 (refer to FIGS. 2A and 2B). In a second embodiment, a lithium-ion secondary battery 20 was fabricated by using an insulating coating film as an insulator 10 (refer to FIG. 3). Note that this insulating coating film was formed by applying an adhesive agent evenly on a positive electrode lead piece 2 and then solidifying the adhesive agent thus applied. In a third embodiment, a lithium-ion secondary battery 20 was fabricated by using a molded insulating product as an insulator 10. Note that the molded insulating product made of polypropylene (PP) was used.

### [Comparative Example of Battery]

In a comparative example, a lithium-ion secondary battery was fabricated without using the insulator 10. The other arrangements of the comparative-example lithium-ion secondary battery were the same as the first to third embodiments (three embodiments) of the lithium-ion secondary batteries mentioned above.

### [Experiments]

Each of the batteries fabricated in the first to third embodiments and the comparative example were charged with constant current and voltage of "6 A, 4.2 V" for a period of two hours. Then, each battery was set on a vibration tester installed in a thermostatic chamber capable of controlling temperature variations in a range of -40° to +80°C within 15 minutes. While varying an ambient temperature in the range of -40°C to +80°C, each battery was repeatedly exposed to each of temperatures of -40°C and +80°C for a period of two hours. In each of upward-downward, frontward-backward, and leftward-rightward directions, a logarithmic frequency sweeping was performed at frequencies of 10 to 55 Hz [10G], 55 to 60 Hz [10 to 30G], and 60 to 200 Hz [30G] in reciprocation for ten minutes. In this procedure, each battery was subjected to thermal-shock vibration combination testing for a total of 50 hours. Before and after the above test, voltage measurements were made on each battery. With reference to a change in voltage that was revealed in the voltage measurement conducted after the above test, each battery was checked for a possible internal short-circuit therein, and then disassembled for detailed examination. The test results are shown in TABLE 1 below.

**TABLE 1**

| | Voltage before test (V) | Voltage after test (V) | Short-circuit |
|---|---|---|---|
| Comparative example | 4.100 | 3.650 | Found between lead strip and battery container |
| First embodiment | 4.100 | 4.065 | Not found |
| Second embodiment | 4.100 | 4.059 | Not found |
| Third embodiment | 4.100 | 4.054 | Not found |

As shown in TABLE 1, in the comparative-example battery having a conventional configuration, a minuscule short-circuit occurred between a positive lead piece 2 and a battery container 7 having negative polarity. As compared with the voltage measured before the test, the voltage measured after the test was lower by 0.450 V. The comparative-example battery was disassembled and examined in detail. In the examination, a black mark indicating the occurrence of a short-circuit was found at an abutting point between the positive electrode lead piece 2 and the battery container 7. The positive electrode lead piece 2 led out of an outermost circumferential part of the electrode group 6 was disconnected by fusion. On the other hand, in each of the exemplary batteries of the first to third embodiments, a decrease in voltage after the test was relatively small, i.e., in the range of 0.035 V to 0.046 V. In detailed examination by disassembling each of the exemplary batteries of the first to third embodiments, no residual indication of fusion was found on the positive electrode lead piece 2 led out of an outermost circumferential part of the electrode group 6.

A lithium-ion secondary battery of the present invention is capable of preventing an internal short-circuit due to application of possible vibrations without degradation of large-current discharge performance to ensure high reliability for a long time of use. In industrial applications, the present invention is therefore contributable to the manufacture and sales of the lithium-ion secondary batteries.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A lithium-ion secondary battery comprising:
a positive electrode with a comb-like shaped positive electrode lead piece (2) formed on one side of said positive electrode;
a negative electrode with a comb-like shaped negative electrode lead piece (3) formed on one side of said negative electrode;
an electrode assembly in which said positive and negative electrodes are rolled up interposing a separator therebetween, and said positive and negative electrode lead pieces are directed in the mutually opposite directions at opposite sides of said positive and negative electrodes;
a ring-like shaped positive electrode collector disposed on one end side of said electrode assembly, said positive electrode lead piece (2) being joined to an outer periphery part of said positive electrode collector to collect potential on said positive electrode;
a ring-like shaped negative electrode collector disposed on the other end side of said electrode assembly at the opposite position to said positive electrode collector, said negative electrode lead piece (3) being joined to an outer periphery part of said negative electrode collector to collect potential on said negative electrode, **characterized by**
a can type battery container (7) for containing said electrode assembly and said positive and negative electrode collectors, electrically connected with the positive electrode collector or the negative electrode collector;
a battery lid (13) for sealing said battery container (7) via a gasket (15); and
an insulator (10) is laid over and at least extends from the outer surface of said positive or negative electrode collector disposed between said electrode assembly and said battery lid (13) to the one end of the lid side of the battery of said electrode assembly so as to cover said positive or negative electrode lead piece (2; 3) with said insulator (10).

2. The lithium-ion secondary battery according to claim 1,
wherein said insulator (10) is laid over and extends from the one end of the lid side of the battery of said positive or negative electrode collector to the one end of the lid side of the battery of said electrode assembly so as to cover said positive or negative electrode lead piece (2; 3).

3. The lithium-ion secondary battery according to claim 1 or 2,
wherein said gasket has a skirt part extended toward a position of said electrode assembly, and said insulator (10) is arranged between said skirt part and said positive or negative electrode lead piece (2; 3).

4. The lithium-ion secondary battery according to claim 3,
wherein said insulator (10) is disposed at a position closer to a part of said positive or negative electrode lead piece of the battery lid' s side led out of a periphery of said electrode assembly than said skirt part.

5. The lithium-ion secondary battery according to at least one of claims 1 to 4,
wherein, said insulator (10) is formed to have an expanded diameter in an inversely tapered shape and covers said positive or negative electrode lead piece (2; 3) of the battery lid's side.

6. The lithium-ion secondary battery according to at least one of claims 1 to 5,
wherein an inner circumferential surface of the battery lid's side of said insulator (10) is in contact with the one end of the battery lid's side and the outer surface in said positive or negative electrode collector, an inner circumferential surface of electrode assembly's side of the insulator is in contact with an outer surface of the battery lid's side of the electrode assembly, and a center part of the insulator (10) covers said positive or negative electrode lead piece (2; 3) of the battery lid's side.

7. The lithium-ion secondary battery according to claim 6,
wherein the center part of said insulator (10) is formed to have an expanded diameter in an inversely tapered shape towards the electrode assembly.

8. The lithium-ion secondary battery according to at least one of claims 1 to 7,
wherein said positive or negative electrode collector is fixedly engaged with battery lid's side of a core (1) disposed at a center of rolling of said electrode assembly.

9. The lithium-ion secondary battery according to at least one of claims 1 to 8,
wherein said insulator (10) is selected from a group consisting of an insulating tape, a molded insulating product, and an insulating coating film.

## Patentansprüche

1. Lithiumionen-Akkumulator mit:
einer positiven Elektrode mit einem kammartig geformten Positivelektroden-Zuleitungsstück (2), das auf einer Seite der positiven Elektrode ausgebildet ist;
einer negativen Elektrode mit einem kammartig geformten Negativelektroden-Zuleitungsstück (3), das auf einer Seite der negativen Elektrode ausgebildet ist;
einer Elektrodenbaugruppe, in der die positive und negative Elektrode aufgewickelt sind, wobei ein Separator zwischen sie gefügt ist, und die Positiv- und Negativelektroden-Zuleitungsstücke in die einander entgegengesetzten Richtungen auf entgegengesetzten Seiten der positiven und negativen Elektrode gerichtet sind;
einem ringartig geformten Positivelektrodenkollektor, der auf einer Endseite der Elektrodenbaugruppe angeordnet ist, wobei das Positivelektroden-Zuleitungsstück (2) mit einem Außenumfangsteil des Positivelektrodenkollektors verbunden ist, um Potenzial an der positiven Elektrode zu sammeln;
einem ringartig geformten Negativelektrodenkollektor, der auf der anderen Endseite der Elektrodenbaugruppe an der entgegengesetzten Position zu dem Positivelektrodenkollektor angeordnet ist, wobei das Negativelektroden-Zuleitungsstück (3) mit einem Außenumfangsteil des Negativelektrodenkollektors verbunden ist, um Potenzial an der negativen Elektrode zu sammeln, **gekennzeichnet durch**
einen Bechertyp-Batteriebehälter (7) zum Beinhalten der Elektrodenbaugruppe und der Positiv- und Negativelektrodenkollektoren, der mit dem Positivelektrodenkollektor oder dem Negativelektrodenkollektor elektrisch verbunden ist;
einem Batteriedeckel (13) zum Abdichten des Batteriebehälters (7) über eine Dichtung (15); und
ein Isolator (10) ist über die Außenfläche des Positiv- oder Negativelektrodenkollektors gelegt oder erstreckt sich zumindest von der Außenfläche des Positiv- oder Negativelektrodenkollektors, der zwischen der Elektrodenbaugruppe und dem Batteriedeckel (13) zu dem einen Ende der Deckelseite der Batterie der Elektrodenbaugruppe angeordnet ist, um das Positiv- oder Negativelektroden-Zuleitungsstück (2; 3) mit dem Isolator (10) abzudecken.

2. Lithiumionen-Akkumulator nach Anspruch 1,
wobei der Isolator (10) über das eine Ende der Deckelseite der Batterie des Positiv- oder Negativelektrodenkollektors gelegt ist oder sich von dem einen Ende der Deckelseite der Batterie des Positiv- oder Negativelektrodenkollektors zu dem einen Ende der Deckelseite der Batterie der Elektrodenbaugruppe erstreckt, um das Positiv-oder Negativelektroden-Zuleitungsstück (2; 3) abzudecken.

3. Lithiumionen-Akkumulator nach Anspruch 1 oder 2,
wobei die Dichtung ein Einfassungsteil aufweist, das in Richtung einer Position der Elektrodenbaugruppe reicht, und der Isolator (10) zwischen dem Einfassungsteil und dem Positiv- oder Negativelektroden-Zuleitungsstück (2; 3) angeordnet ist.

4. Lithiumionen-Akkumulator nach Anspruch 3,
wobei der Isolator (10) an einer Position angeordnet ist, die einem Teil des Positiv- oder Negativelektroden-Zuleitungsstücks der Seite des Batteriedeckels, das aus einem Umfang der Elektrodenbaugruppe herausgeführt ist, näher ist als das Einfassungsteil.

5. Lithiumionen-Akkumulator nach mindestens einem der Ansprüche 1 bis 4,
wobei der Isolator (10) so ausgebildet ist, dass er einen erweiterten Durchmesser in einer umgekehrt konisch zulaufenden Form aufweist und das Positiv- oder Negativelektroden-Zuleitungsstück (2; 3) der Seite des Batteriedeckels abdeckt.

6. Lithiumionen-Akkumulator nach mindestens einem der Ansprüche 1 bis 5,
wobei eine Innenumfangsfläche der Seite des Batteriedeckels des Isolators (10) mit dem einen Ende der Seite des Batteriedeckels und der Außenfläche in dem Positiv-oder Negativelektrodenkollektor in Kontakt ist, eine Innenumfangsfläche der Seite der Elektrodenbaugruppe des Isolators mit einer Außenfläche der Seite des Batteriedeckels der Elektrodenbaugruppe in Kontakt is; und ein Mittelteil des Isolators (10) das Positiv-oder Negativelektroden-Zuleitungsstück (2; 3) der Seite des Batteriedeckels abdeckt.

7. Lithiumionen-Akkumulator nach Anspruch 6,
wobei das Mittelteil des Isolators (10) so ausgebildet ist, dass es einen erweiterten Durchmesser in einer umgekehrt konisch zulaufenden Form in Richtung der Elektrodenbaugruppe aufweist.

8. Lithiumionen-Akkumulator nach mindestens einem der Ansprüche 1 bis 7,
wobei der Positiv- oder Negativelektrodenkollektor mit der Seite des Batteriedeckels eines Kerns (1) fest im Eingriff ist, der in einer Wicklungsmitte der Elektrodenbaugruppe angeordnet ist.

9. Lithiumionen-Akkumulator nach mindestens einem der Ansprüche 1 bis 8,
wobei der Isolator (10) ausgewählt ist aus einer Gruppe, bestehend aus einem Isolierband, einem Isolierungsformprodukt und einer Isolierungsbeschichtungsfolie.

## Revendications

1. Batterie secondaire lithium-ion comportant :
une électrode positive ayant un élément de fil d'électrode positive en forme de peigne (2) formé sur un côté de ladite électrode positive,
une électrode négative ayant un élément de fil d'électrode négative en forme de peigne (3) formé sur un côté de ladite électrode négative,
un ensemble d'électrodes dans lequel lesdites électrodes positive et négative sont enroulées en intercalant un séparateur entre elles, et lesdits éléments de fil d'électrodes positive et négative sont dirigés dans les directions mutuellement opposées sur des côtés opposés desdites électrodes positive et négative,
un collecteur d'électrode positive en forme d'anneau disposé sur un côté d'extrémité dudit ensemble d'électrodes, ledit élément de fil d'électrode positive (2) étant relié à une partie de périphérie extérieure dudit collecteur d'électrode positive pour collecter le potentiel sur ladite électrode positive,
un collecteur d'électrode négative en forme d'anneau disposé sur l'autre côté d'extrémité dudit ensemble d'électrodes au niveau de la position opposée audit collecteur d'électrode positive, ledit élément de fil d'électrode négative (3) étant relié à une partie périphérique extérieure dudit collecteur d'électrode négative pour collecter le potentiel sur ladite électrode négative, **caractérisée par**
un conteneur de batterie de type bac (7) pour contenir ledit ensemble d'électrodes et lesdits collecteur d'électrodes positive et négative, électriquement connecté au collecteur d'électrode positive ou au collecteur d'électrode négative,
un couvercle de batterie (13) pour fermer ledit conteneur de batterie (7) via un joint d'étanchéité (15), et
un isolant (10) placé sur la surface extérieure et s'étendant au moins depuis la surface extérieure dudit collecteur d'électrode positive ou négative disposée entre ledit ensemble d'électrodes et ledit couvercle de batterie (13) jusqu'à l'extrémité du côté de couvercle de la batterie dudit ensemble d'électrodes de manière à recouvrir ledit élément de fil d'électrode positive ou négative (2 ; 3) avec ledit isolant (10).

2. Batterie secondaire lithium-ion selon la revendication 1,
dans laquelle ledit isolant (10) est placé sur l'extrémité du côté de couvercle de la batterie dudit collecteur d'électrode positive ou négative et s'étend depuis celle-ci jusqu'à l'extrémité du côté de couvercle de la batterie dudit ensemble d'électrodes de manière à recouvrir ledit élément de fil d'électrode positive ou négative (2 ; 3).

3. Batterie secondaire lithium-ion selon la revendication 1 ou 2,
dans laquelle ledit joint d'étanchéité a une partie de jupe qui s'étend vers une position dudit ensemble d'électrodes, et ledit isolant (10) est disposé entre ladite partie de jupe et ledit élément de fil d'électrode positive ou négative (2 ; 3).

4. Batterie secondaire au lithium-ion selon la revendication 3,
dans laquelle ledit isolant (10) est placé à une position plus proche d'une partie dudit élément de fil d'électrode positive ou négative du côté de couvercle de batterie d'une périphérie dudit ensemble d'électrodes que de ladite partie de jupe.

5. Batterie secondaire lithium-ion selon au moins l'une des revendications 1 à 4,
dans laquelle, ledit isolant (10) est formé pour avoir un diamètre étendu dans une forme inversement conique et recouvre ledit élément de fil d'électrode positive ou négative (2 ; 3) du côté de couvercle de batterie.

6. Batterie secondaire lithium-ion selon au moins l'une des revendications 1 à 5,
dans laquelle une surface circonférentielle intérieure du côté de couvercle de batterie dudit isolant (10) est en contact avec l'extrémité du côté de couvercle de batterie et la surface extérieure dudit collecteur d'électrode positive ou négative, une surface circonférentielle intérieure du côté de l'ensemble d'électrodes de l'isolant est en contact avec une surface extérieure du côté de couvercle de batterie de l'ensemble d'électrodes, et une partie centrale de l'isolant (10) recouvre ledit élément de fil d'électrode positive ou négative (2 ; 3) du côté de couvercle de batterie.

7. Batterie secondaire lithium-ion selon la revendication 6,
dans laquelle la partie de centre dudit isolant (10) est formée pour avoir un diamètre étendu dans une forme inversement conique en direction de l'ensemble d'électrodes.

8. Batterie secondaire lithium-ion selon au moins l'une des revendications 1 à 7,
dans laquelle ledit collecteur d'électrode positive ou négative est mis fixement en prise avec le côté de couvercle de batterie d'un noyau (1) disposé au niveau d'un centre de roulement dudit ensemble d'électrodes.

9. Batterie secondaire lithium-ion selon au moins l'une des revendications 1 à 8,
dans laquelle ledit isolant (10) est sélectionné à partir d'un groupe constitué d'un ruban isolant, d'un produit isolant moulé, et d'une pellicule protectrice isolante.
